# EUROPÄISCHE PATENTSCHRIFT

(11) **EP 2 755 929 B1**
(45) Veröffentlichungstag und Bekanntmachung des Hinweises auf die Patenterteilung: **18.01.2017**
(21) Anmeldenummer: 13776999.8
(22) Anmeldetag: 08.10.2013
(51) Int. Cl.: C04B 26/14, C04B 26/02, C04B 26/12, C04B 20/10, C04B 40/06, C04B 103/00, C04B 111/00, C04B 111/60

(54) **ZUSAMMENSETZUNG MIT KAPSELN**
COMPOSITION WITH CAPSULES
COMPOSITION CONTENANT DES CAPSULES

(30) Priorität: 06.11.2012 DE 102012220149
(43) Veröffentlichungstag der Anmeldung: 23.07.2014
(73) Patentinhaber: ibex Beteiligungs- und Managementgesellschaft mbH, 53902 Bad Münstereifel (DE)
(72) Erfinder: HARZHEIM, Rainer, 53902 Bad Münstereifel (DE)
(74) Vertreter: Claessen, Rolf
(86) Internationale Anmeldenummer: PCT/EP2013/070938
(87) Internationale Veröffentlichungsnummer: WO 2014/072142

(56) Entgegenhaltungen:
- EP-A1- 0 041 210
- EP-A1- 0 063 475
- EP-A1- 0 543 675
- EP-A1- 2 181 972
- JP-A- 2003 194 032
- KR-A- 20090 082 589
- US-A1- 2003 000 425

## Beschreibung

Die Erfindung betrifft eine bindemittelhaltige Zusammensetzung mit Kapseln, die Verwendung dieser Zusammensetzung, einen Behälter enthaltend diese Zusammensetzung sowie ein Verfahren zum Verfugen von Wand- und Bodenbelägen.

Es gibt bereits Mörtelsysteme zur Verwendung im Bereich von Bodenbelägen oder Wandbelägen. Diese Mörtelsysteme können auch flüssige Bindemittel enthalten. Diese Bindemittel können ein- oder zweikomponentig sein. Diese Bindemittel sind meist Epoxidharze, Polyurethanharze oder spezielle Flüssigpolymere aber auch Bitumina. Bei den zweikomponentigen Systemen kann werkseitig mit einer Komponente und entsprechenden Zuschlagsstoffen vorgemischt sein und die zweite Komponente wird bauseits zugegeben und vermischt, oder beide Komponenten werden bauseits den Zuschlagsstoffen zugegeben und vermischt. Bei den einkomponentigen Systemen erfolgt die Vermischung auf der Baustelle, es sei denn, das Bindemittel wird werkseitig bei der Abfüllung mit den Zuschlagsstoffen beigemischt und der Mörtel anschließend durch Vakuumisierung oder Begasung vor Aushärtung geschützt. Dies hat beispielsweise den Nachteil, dass die genauen Mischungsverhältnisse oft nicht eingehalten werden. Zudem muss bei solchen Produkten ein Behälter mit Bindemittel vorhanden sein. Diese Behälter mit dem Bindemittel müssen üblicherweise aufwändig gekennzeichnet sein. Dem gesamten System muss eine genaue Beschreibung zur Verarbeitung beigelegt sein.

JP 2003 194032 A beschreibt eine wässrige Härterzusammensetzung mit gekapseltem Bindemittel.

EP 0 543 675 A1 beschreibt einen Klebstoff mit Mikrokapseln.

EP 2 181 972 A1 beschreibt ein abindeverzögertes eingekapseltes hydraulisches Bindemittel.

KR 10 2009 0082 589 A beschreibt ein Fugendichtmittel auf Epoxybasis.

EP 0 063 475 A1 beschreibt ein mikroverkapseltes Epoxy-Klebstoffsystem.

US 2003/0000425 A1 beschreibt einen mikroverkapselten rissresistenten Zement.

Die Aufgabe der Erfindung besteht darin, die vorgenannten Nachteile zu vermeiden.

Die der Erfindung zugrunde liegende Aufgabe wird in einer ersten Ausführungsform durch eine Zusammensetzung gelöst, die wenigstens
a. Bindemittel und
b. Füllstoffe
enthält,
wobei das Bindemittel verkapselt ist, wobei der Durchmesser der Kapseln wenigstens 2 mm beträgt.

Diese Zusammensetzung hat gegenüber dem Stand der Technik den Vorteil, dass keine zusätzlichen Behälter benötigt werden, immer das perfekte Mischungsverhältnis eingestellt werden kann, die Produkte nach der Abfüllung nicht vakuumiert werden müssen und die Produktionsprozesse für die Produkte wesentlich vereinfacht sind. Beim Anmischen der erfindungsgemäßen Zusammensetzung werden die Kapseln zerstört und das Bindemittel in genau dem gewünschten Verhältnis mit den übrigen Bestandteilen freigesetzt.

Vorzugsweise sind die Kapseln elliptisch oder kugelförmig. Dadurch lassen sich die Kapseln und deren Inhalt beim Anmischen besonders homogen verteilen.

Optional kann auch hydraulisch härtendes Bindemittel wie beispielsweise Zement enthalten sein.

Vorzugsweise ist in der Zusammensetzung auch Wasser enthalten, wobei das Wasser auch verkapselt sein kann. Dies hat gegenüber den bisherigen Zusammensetzungen den Vorteil, dass eine solche Zusammensetzung sofort verarbeitet werden kann.

Der Durchmesser der Kapseln beträgt wenigstens 2 mm. Unterhalb dieses Durchmessers besteht die Gefahr, dass nicht sämtliche Kapseln beim Anmischen zerstört werden. Weiterhin erhöht sich bei geringeren Durchmessern der relative Anteil des Verkapselungsmaterials, das prinzipiell in den Zusammensetzungen unerwünscht ist.

Vorzugsweise beträgt der Durchmesser der Kapseln höchstens 20 cm, bevorzugt höchstens 10 cm, ganz besonders bevorzugt höchstens 5 cm. Bei größeren Durchmessern werden die Kapseln tendenziell instabiler und teilweise schon während des Transports zerstört. Weiterhin lassen sich größere Kapseln nur noch schwer ökonomisch sinnvoll herstellen.

Vorzugsweise beträgt die Wandstärke der Kapseln wenigstens 50 nm, bevorzugt wenigstens 200 nm, ganz besonders bevorzugt wenigstens 10 µm. Liegt die Wandstärke unterhalb dieses Bereiches, so besteht die Gefahr, dass die Kapseln während des Transports und schon vor der Verarbeitung der Zusammensetzung zerstört werden. Damit unterscheiden sich die erfindungsgemäßen Kapseln deutlich von den in anderen technischen Gebieten verwendeten Kapseln, die wesentlich geringere Wandstärken aufweisen. Übliche Wandstärken im Bereich der Medizin liegen beispielsweise bei etwa 10 nm. Diese sind für die erfindungsgemäße Zusammensetzung eher ungeeignet.

Vorzugsweise beträgt die Wandstärke der Kapseln höchstens 100 µm, bevorzugt höchstens 50 µm. Liegt die Wandstärke darüber, so kann dies dazu führen, dass die Kapseln beim Anmischen vor der Verarbeitung nicht vollständig zerstört werden.

Vorzugsweise ist das Material der Kapseln bindemittelbeständig, insbesondere Polyamid. Dadurch kann verhindert werden, dass das Bindemittel aus den Kapseln austritt und schon vor der Verarbeitung aushärtet.

Der Anteil hydraulisch erhärtender Bindemittel der erfindungsgemäßen Zusammensetzung liegt vorzugsweise in einem Bereich von 1 bis 60 Gew.%.

Der Füllstoffgehalt bei Gegenwart von hydraulisch härtenden Bindemitteln der erfindungsgemäßen Zusammensetzung liegt vorzugsweise in einem Bereich von 40 bis 99 Gew.%.

Falls kein hydraulisch härtendes Bindemittel enthalten ist, so liegt der Füllstoffgehalt vorzugsweise in einem Bereich von 60 bis 99 Gew.%, insbesondere in einem Bereich von 95 bis 97 Gew.%.

Die mittlere Korngröße der Füllstoffe liegt vorzugsweise in einem Bereich von 0,1 bis 20,0 mm, insbesondere in einem Bereich von 0,11 bis 2 mm. Unabhängig davon sind die Füllstoffe vorzugsweise aus Splitt, Glas, Sand oder Mischungen dergleichen ausgewählt. Besonders bevorzugt ist der Füllstoff Sand bzw. Gesteinskörnungen.

Der Bindemittelgehalt liegt vorzugsweise in einem Bereich von 1 bis 40 Gew.%, bevorzugt in einem Bereich von 3 bis 5 Gew.%. Bei diesem Bindemittelgehalt eignet sich die erfindungsgemäße Zusammensetzung besonders gut zum Verfugen von Bodenbelägen oder Wandbelägen.

Das Bindemittel basiert vorzugsweise auf einem Bindemittelsystem ausgewählt aus Polyurethanharz, speziellen Flüssigpolymeren, Epoxidharz aber auch Bitumina oder Mischungen dergleichen. Besonders bevorzugt basiert das Bindemittel auf Epoxidharz, da hierbei die Vorteile der Kapseln besonders stark zu Tage treten.

In der erfindungsgemäßen Zusammensetzung kann auch vorzugsweise ein Härter enthalten sein. Besonders bevorzugt ist Härter in der Zusammensetzung enthalten, bei der das Bindemittel auf Epoxidharz basiert. Vorzugsweise ist das Harz und/oder der Härter verkapselt.

Vorzugsweise können auch Additive wie beispielsweise Verzögerer in der erfindungsgemäßen Zusammensetzung enthalten sein. Diese Additive können ebenfalls verkapselt sein.

In einer weiteren Ausführungsform wird die der Erfindung zugrunde liegende Aufgabe durch die Verwendung der erfindungsgemäßen Zusammensetzung im Wand- und/oder Bodenbereich gelöst.

In einer weiteren Ausführungsform wird die der Erfindung zugrunde liegende Aufgabe durch einen Behälter enthaltend die erfindungsgemäße Zusammensetzung gelöst.

Vorzugsweise liegen die Kapseln in dem Behälter mit den übrigen Bestandteilen der erfindungsgemäßen Zusammensetzung oder sind mit den übrigen Bestandteilen gemischt. Wird für das Aufmischen der Zusammensetzung beispielsweise ein Stabrührer verwendet, kann hierdurch ein Verspritzen des Inhaltes der Kapseln vermieden werden

Der erfindungsgemäße Behälter ist vorzugsweise ausgewählt aus der Gruppe Eimer, Säcke, BigBags.

In einer weiteren Ausführungsform wird die der Erfindung zugrunde liegende Aufgabe durch ein Verfahren zum Verfugen von Wand- und Bodenbelägen gelöst, wobei man
a. in einem ersten Schritt eine erfindungsgemäße Zusammensetzung oder die Zusammensetzung in dem erfindungsgemäßen Behälter vermischt und dabei die Kapseln zerstört, und
b. in einem zweiten Schritt die so erhaltene Zusammensetzung in die Fugen einbringt.

Vorzugsweise vermischt man die Zusammensetzung, indem man sie verrührt, insbesondere mit einem mechanischen Rührgerät.

### Ausführungsbeispiel

Ein handelsübliches Mörtelsystem auf Epoxidharzbasis zum Verfugen von Bodenbelag wie beispielsweise das Produkt vdw800 der Firma Gesellschaft für technische Kunststoffe mbH wurde in einem Eimer bereitgestellt. Bei diesem System befand sich bereits Härter im Sand. Die Flasche mit dem Bindemittel wurde entnommen und verkapselt. Als Material für die runden Kapseln wurde Polyamid ausgewählt. Der Durchmesser wurde auf 4 cm festgelegt. Die Wandstärke der Kapseln wurde auf 11 µm festgelegt. Die Kapseln wurden analog zu dem in EP0041210A1 beschriebenen Verfahren hergestellt.

Die entstandenen Kapseln wurden zurück in den Eimer gelegt und mit einer Schicht des übrigen Materials in dem Eimer mit einer Dicke von 8 cm bedeckt.

Der Eimer wurde wieder verschlossen und zur Baustelle transportiert. Dort wurde der Eimer geöffnet, das notwendige Wasser zugegeben und der Inhalt mit einem mechanischen Rührgerät verrührt. Dabei sind alle Kapseln geplatzt und der Inhalt konnte sich mit den übrigen Bestandteilen in dem Eimer vermischen.

Anschließend wurden herkömmliche Steinbeläge in einer Garagenausfahrt mit der entstandenen Zusammensetzung verfugt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Zusammensetzung wenigstens enthaltend
a. Füllstoffe und
b. Bindemittel,
wobei das Bindemittel verkapselt Ist, wobei der Durchmesser der Kapseln wenigstens 2 mm beträgt.

2. Zusammensetzung gemäß Anspruch 1, **dadurch gekennzeichnet, dass** die Kapseln kugelförmig sind.

3. Zusammensetzung gemäß einem der Ansprüche 1 bis 2, **dadurch gekennzeichnet, dass** in der Zusammensetzung auch Wasser enthalten ist, wobei das Wasser insbesondere verkapselt ist.

4. Zusammensetzung gemäß einem der Ansprüche 1 bis 3, **dadurch gekennzeichnet, dass** die Wandstärke der Kapseln wenigstens 50 nm, insbesondere wenigstens 200 nm, ganz besonders bevorzugt wenigstens 10 µm beträgt.

5. Zusammensetzung gemäß einem der Ansprüche 1 bis 4, **dadurch gekennzeichnet, dass** das Material der Kapseln bindemittelbeständig ist, insbesondere Polyamid ist.

6. Verwendung der Zusammensetzung gemäß einem der Ansprüche 1 bis 5 Im Wand- und/oder Bodenbereich.

7. Behälter enthaltend eine Zusammensetzung gemäß einem der Ansprüche 1 bis 5.

8. Verfahren zum Verfugen von Wand- und Bodenbelägen, wobei man
a. in einem ersten Schritt eine Zusammensetzung gemäß einem der Patentansprüche 1 bis 5 oder die Zusammensetzung in dem Behälter gemäß Anspruch 7 vermisoht und dabei die Kapseln zerstört, und
b. In einem zweiten Schritt die so erhaltene Zusammensetzung in die Fugen einbringt.

## Claims

1. A composition containing at least
a. fillers and
b. a binder,
wherein the binder is encapsulated, wherein the capsule diameter is at least 2 mm.

2. The composition according to claim 1, **characterised in that** the capsules are spherical.

3. The composition according to any one of claims 1 to 2, **characterised in that** the composition also contains water, wherein the water is in particular encapsulated.

4. The composition according to any one of claims 1 to 3, **characterised in that** the capsule wall thickness is at least 50 nm, in particular at least 200 nm, very particularly preferably at least 10 µm.

5. The composition according to any one of claims 1 to 4, **characterised in that** the capsule material is binder resistant, in particular polyamide.

6. Use of the composition according to any one of claims 1 to 5 in the wall and/or floor areas.

7. A container comprising a composition according to any of the claims 1 to 5.

8. A process for jointing wall and floor coverings, wherein
a. in a first step a composition according to any one of claims 1 to 5 or the composition in the container according to claim 7 is mixed and thereby the capsules are destroyed and
b. in a second step the composition thus obtained is introduced in the joints.

## Revendications

1. Composition contenant au moins
a. des charges, et
b. un liant,
dans laquelle le liant est encapsulé, et dans laquelle le diamètre des capsules est d'au moins 2 mm.

2. Composition selon la revendication 1, **caractérisée en ce que** les capsules sont sphériques.

3. Composition selon l'une quelconque des revendications 1 à 2, **caractérisée en ce que** la composition contient également de l'eau, dans laquelle l'eau est notamment encapsulée.

4. Composition selon l'une quelconque des revendications 1 à 3, **caractérisée en ce que** l'épaisseur de paroi des capsules est d'au moins 50 nm, en particulier d'au moins 200 nm, plus particulièrement de préférence d'au moins 10 µm.

5. Composition selon l'une quelconque des revendications 1 à 4, **caractérisée en ce que** la matière des capsules est résistante à un liant, notamment du polyamide.

6. Utilisation de la composition selon l'une quelconque des revendications 1 à 6 dans une zone de paroi et/ou de plancher.

7. Récipient contenant une composition selon l'une quelconque des revendications 1 à 5.

8. Procédé pour le jointoiement de murs et de sols, dans lequel
a. dans une première étape, une composition selon l'une quelconque des revendications 1 à 5 ou la composition dans le récipient selon la revendication 7 est mélangée, les capsules étant détruites à cette occasion, et
b. dans une seconde étape, la composition ainsi obtenue est introduite dans les joints.
